# EUROPÄISCHE PATENTSCHRIFT

(11) **EP 2 106 466 B1**
(45) Veröffentlichungstag und Bekanntmachung des Hinweises auf die Patenterteilung: **11.09.2013**
(21) Anmeldenummer: 07856076.0
(22) Anmeldetag: 11.12.2007
(51) Int. Cl.: D01D 5/00, D01F 6/22, D01F 11/04, D06M 23/08

(54) **PARTIKELMODIFIZIERTE NANO- UND MESOFASERN, HERSTELLUNGSVERFAHREN UND VERWENDUNG**
PARTICLE-MODIFIED NANOFIBERS AND MESOFIBERS, PRODUCTION PROCESS AND USE
FIBRES NANOMÉTRIQUES ET MÉSOMÉTRIQUES À PARTICULES MODIFIÉES PROCEDE DE PRODUCITON ET UTILISATION

(30) Priorität: 23.12.2006 DE 102006062113
(43) Veröffentlichungstag der Anmeldung: 07.10.2009
(73) Patentinhaber: Philipps-Universität Marburg, 35037 Marburg (DE)
(72) Erfinder: GREINER, Andreas, 35287 Amöneburg (DE); STOILJKOVIC, Aleksandar, 18300 Pirot (RS)
(74) Vertreter: Buchhold, Jürgen
(86) Internationale Anmeldenummer: PCT/DE2007/002225
(87) Internationale Veröffentlichungsnummer: WO 2008/077372

(56) Entgegenhaltungen:
- JP-A- 1 192 877
- US-A- 5 618 622
- DATABASE WPI Week 199140 Thomson Scientific, London, GB; AN 1991-291888 XP002503802 & JP 03 193979 A (UNITIKA LTD) 23. August 1991 (1991-08-23) & JP 03 193979 A (UNITIKA LTD) 23. August 1991 (1991-08-23)
- LI L ET AL: "Ultra-fine polyelectrolyte fibers from electrospinning of poly(acrylic acid)" POLYMER, ELSEVIER SCIENCE PUBLISHERS B.V, GB, Bd. 46, Nr. 14, 27. Juni 2005 (2005-06-27), Seiten 5133-5139, XP004924349 ISSN: 0032-3861
- WANG LING ET AL: "A Biocompatible Method of Decorporation: Bisphosphonate-Modified Magnetite Nanoparticles to Remove Uranyl Ions from Blood" 1. Januar 2006 (2006-01-01), JOURNAL OF THE AMERICAN CHEMICAL SOCIETY, AMERICAN CHEMICAL SOCIETY, WASHINGTON, DC.; US, US, PAGE(S) 13358 - 13359 , XP002475442 ISSN: 0002-7863 Seite 1, Zeilen 25-50
- TAO SONG ET AL: "Encapsulation of self assembled FePt magnetic nanoparticles in PCl nanofibers by coaxial electrospinning" CHEMICAL PHYSIC LETTERS, 2005, Seiten 317-322, XP002503890

## Beschreibung

Die vorliegende Erfindung betrifft Partikel-Faser-Komposite umfassend Nano- oder Mesofasem und auf deren Oberfläche aufgebrachte Partikel sowie Verfahren zur Herstellung dieser Partiket-Faser-Komposite.

### Beschreibung und Einleitung des allgemeinen Gebietes der Erfindung

Die vorliegende Erfindung betrifft die Gebiete makromolekulare Chemie, Verfahrenstechnik und Materialwissenschaften.

### Stand der Technik

Nano- und Mesofasem gewinnen zunehmend an Bedeutung als Filtrations- und Separationsmedien, in Textilherstellung, Optik, Elektronik, Biotechnologie, Pharmazie und Medizin.

Besonderes Interesse gilt solchen Fasern, die durch Zusatz weiterer Stoffe, beispielsweise durch Zusatz von Partikeln, gezielt mit bestimmten chemischen, physikalischen und/oder biologischen Eigenschaften ausgestattet werden können.

Die DE 199 10 021 C1 beschreibt ein Verfahren zur Herstellung von Formkörpern, bei dem eine Polymerlösung enthaltend fein verteilte Zusatzstoffe und eine weitere Polymerlösung ohne Zusatzstoffe simultan extrudiert werden.

Die DE 43 21 289 A1 und die DE 43 07 398 A1 offenbaren Elektretfasern mit ver besserter Ladungsstabilität, Verfahren zu ihrer Herstellung, und Textilmaterial enthaltend diese Textilfasern. Dabei wird ein fadenbildendes Polymerisat oder Polykondensat mit einem Ladungssteuerungsmittel gemischt und mittels Nass- oder Trockenspinnverfahren zu Filamenten versponnen.

In der DE 31 31 073 A1 werden Fasern mit Zusatzstoffen beschrieben, wobei dieser Zusatzstoff kontrolliert abgegeben werden soll. Hierzu wird der Zusatzstoff in einer Lösung der polymeren Verbindung dispergiert und das Gemisch zu Fasern versprüht. Die Zusatzstoffe werden dabei sowohl in die sich bildenden Fasern eingelagert als auch an deren Oberfläche angelagert. Die Herstellung von Fasern mit Durchmessern im Meso- und Nanobereich ist mittels Versprühen von Polymerlösungen allerdings nicht möglich.

Die DE 697 32 770 T2 beschreibt ferroelektrische Fasern und deren Anwendungen als Filtermedien. Hierfür wird ein ferroelektrisches Material destrukturiert, mit einem thermoplastischen Polymer gemischt und anschließend durch Schmelzextrusion oder Lösungsspinnen zu Fasern verarbeitet.

In der DE 696 33 817 T2 wird ein Verfahren zur Herstellung von Fasern enthaltend feine Metallteilchen offenbart. Es werden zunächst Fasern aus Acrylonitril gebildet und mit Hydrazin vernetzt. Dann werden Carboxylgruppen eingeführt, gefolgt von der Aufbringung von Metallionen. Zuletzt werden die Metallionen zu Metallpartikeln reduziert, die auf der Faser präzipitieren.

Die DE 694 25 969 T2 beschreibt antistatische Fasern für Textilien. Hierbei werden ein Polymer und eine Dispersion von Zinkoxid-Stabpartikeln separat vorbereitet und während des Spinnprozesses oder unmittelbar danach gemischt. Die Faserbildung erfolgt mittels Schmelz-, Nass- oder Trockenspinnen; und es sind im Allgemeinen höchst kristalline Polymere gewünscht.

JP 01 192877 A und DATABASE WPI Week 199140 Thomson Scientific, AN 1991-291888 offenbaren ionisch funktionalisierte Tierhaare.

Li et al. ("Ultra-fine polyelectrolyte fibers from electrospinning of poly(acrylic acid)", Polymer, Elsevier Science Publichers B.V, GB, Bd. 46 Nr. 14, Seiten 5133-5139) beschreiben elektrogesponnen Polyacrylsäure-Fasern mit einer umfassenden Polyelektrolytbeschichtung auf ihrer Oberfläche.

US 5,618,622 A sieht Hydrocarbonfasem vor, die mit Polyelektrolyten beschichtet sind, mit hin also Fasern die durch Extrusionsmethoden hergestellt werden.

Tao Song et al. ("Encapsulation of self assembled FePt magnetic nanoparticles in Pcl nanofibres by coaxial electrospinning" Chemical Physic Letters, 2005, Seiten 317-322) beschreiben PCI-Fasem, die FePt-Natnopartikel enthalten. Dabei sind die FePt-Nanopartikel im Wesentlichen im Inneren der Fasern angeordnet.

Wang Ling et al. ("A Biocompatible Method of Decorporation: Bisphosphonate-Modified Magnetite Nanoparticles to Remove Uranyl Ions from Blood", 2006, Journal of the American Chemical Society, Seiten 13358-13359) beschreiben zwar Nanopartikel, nicht jedoch die Anordnung von Nanopartikeln an der Oberfläche von Nanofasem.

Schließlich beschreibt die WO 2005/118925 A1 feldantwortende superparamagnetische Kompositnanofasem. Hierbei werden eine Polymerlösung und eine Partikeldispersion gemischt und nach dem Mischen elektroversponnen. Die Partikel sind bevorzugt superparamagnetisch oder ferromagnetisch. Bei Fasern, die gemäß dieser Offenbarung erhalten werden, befindet sich allerdings nur ein geringer Anteil der magnetischen Partikel auf der Faseroberfläche; der Hauptanteil der Partikel sitzt im Faserinnern.

Die im Stand der Technik offenbarten partikelhaltigen Fasern sowie die Verfahren zu ihrer Herstellung liefern in keinem Fall Fasern, die kleine Durchmesser (im Mikro- und Nanometerbereich) aufweisen und zudem ausschließlich an der Faseroberfläche partikelmodifiziert sind.

Zur Herstellung von Nano- und Mesofasem sind dem Fachmann eine Vielzahl an Verfahren bekannt, von denen dem Elektrospinnverfahren ("Electrospinning") derzeit die größte Bedeutung zukommt. Bei diesem Verfahren, welches beispielsweise von D.H. Reneker, H.D. Chun in Nanotechn. 7 (1996), Seite 216 f. beschrieben ist, wird eine Polymerschmelze oder eine Polymerlösung an einer als Elektrode dienenden Kante einem hohen elektrischen Feld ausgesetzt. Dies kann beispielsweise dadurch erreicht werden, daß die Polymerschmelze oder Polymerlösung in einem elektrischen Feld unter geringem Druck durch eine mit einem Pol einer Spannungsquelle verbundene Kanüle extrudiert wird. Aufgrund der dadurch erfolgenden elektrostatischen Aufladung der Polymerschmelze oder Polymerlösung entsteht ein auf die Gegenelektrode gerichteter Materialstrom, der sich auf dem Wege zur Gegenelektrode verfestigt. In Abhängigkeit von den Elektrodengeometrien werden mit diesem Verfahren Vliese bzw. so genannte Nonwovens oder Ensembles geordneter Fasern erhalten.

Die vorliegende Erfindung liefert dagegen Partikel-Komposit-Fasem, bei denen sich die Partikel ausschließlich auf der Oberfläche der Kompositfasern befinden. Für das Aufbringen der Partikel auf die Faseroberfläche werden im Gegensatz zum Stand der Technik keine molekularen Lösungen von Partikel bildenden Substanzen verwendet, sondern es werden partikuläre Dispersionen mit ionische funktionalisierten Nano- oder Mesofasern in Kontakt gebracht. Das erfindungsgemäße Verfahren unterscheidet sich daher vom etablierten Layer-by-Layer-Verfahren, denn bei letzterem werden Schicht für Schicht Polyelektrolyte gegensinniger Ladung aufgebracht, wofür immer molekular gelöste Polyelektrolyte eingesetzt werden.

### Aufgabe

Aufgabe der vorliegenden Erfindung ist es, neuartige Partikel-Faser-Komposite sowie Verfahren zu ihrer Herstellung bereitzustellen.

### Lösung der Aufgabe

Die Aufgabe der Bereitstellung neuartiger Partikel-Faser-Komposite wird erfindungsgemäß gelöst durch Kompositfasern umfassend ionisch funktionalisierte Nano- oder Mesofasem und gegensinnig geladene ionisch funktionalisierte Partikel, welche auf der Oberfläche der Nano- oder Mesofasern aufgebracht sind, wobei die Nano- oder Mesofasern ionisch funktionalisierte elektrogesponnene Fasern sind.

Die Aufgabe, Verfahren zur Herstellung der efindungsgemäßen Partikel-Faser-Komposite bereitzustellen, wird erfindungsgemäß gelöst, indem ionisch funktionalisierte Nano- oder Mesofasem mit einer Dispersion umfassend gegensinnig geladene ionisch funktionaliserte Partikel behandelt werden, wobei die Nano- oder Mesofasem ionisch funktionalisierte elektrogesponnene Fasern sind.

Nano- oder Mesofasem können mit neuartigen chemischen oder physikalischen Eigenschaften ausgestattet werden, wenn die Fasern selbst ionisch funktionalisiert sind und gegensinnig geladene ionisch funktionalisierte Partikel auf ihrer Oberfläche aufgebracht werden. Dabei bedecken die Partikel die Faseroberfläche mindestens teilweise. Unter vollständiger Bedeckung ist dabei eine Kompositfaser zu verstehen, auf deren Oberfläche sich eine Monolage aus Partikeln befindet, welche die Faseroberfläche vollständig bedeckt. Derartige Komposite umfassend Nano- oder Mesofasem und ausschließlich auf deren Oberfläche aufgebrachte Partikel sind bislang nicht bekannt.

Dabei werden entweder solche Nano- oder Mesofasem eingesetzt, deren Oberfläche bereits ionisch funktionalisiert ist, oder die Oberfläche der Nano- und Mesofasern wird zunächst ionisch funktionalisiert, bevor sie mit einer Dispersion umfassend gegensinnig geladene Partikel in Kontakt gebracht werden.

"Ionisch funktionalisiert" bedeutet im Rahmen der vorliegenden Erfindung, dass sich auf der Oberfläche der Nano- oder Mesofasem sowie der Partikel ionische oder ionisierbare funktionelle Gruppen befinden, wobei die Ladung der Partikel gegensinnig zur Ladung der Meso- oder Nanofasem ist: Erfindungsgemäße Kompositfasern weisen entweder anionisch funktionalisierte Nano- oder Mesofasem sowie kationisch funktionalisierte Partikel auf oder umgekehrt.

Nachfolgend werden Nano- oder Mesofasem sowie Partikel als "ionisch funktionalisiert" bezeichnet, wenn sich auf deren Oberfläche ionische Gruppen befinden, und zwar unabhängig davon, ob es sich beim Vorhandensein dieser ionischen Gruppen um eine intrinsische Eigenschaft des Faser-oder Partikelmaterials handelt, oder ob die ionische Funktionalisierung der Oberfläche nachträglich geschieht. Des Weiteren wird die Bezeichnung "ionisch funktionalisiert" sowohl für anionische als auch auf kationische funktionalisierte Oberflächen verwendet.

Bei den erfindungsgemäßen Nano- oder Mesofasern handelt es sich um Fasern ausgewählt aus der Gruppe nichtionische Polymere, Kohlenstoff, Polyelektrolyte, Ionomere, keramische Materialien (Keramikfasern) oder Metalle (Metallfasern).

Die Nano- oder Mesofasern können beispielsweise durch Schmelzspinnen, Lösungsspinnen, Gelspinnen, Dispersionsspinnen oder Reaktionsspinnen hergestellt werden. Im Rahmen der vorliegenden Erfindung ist das Elektrospinnen aus Lösungen oder Dispersionen besonders bevorzugt.

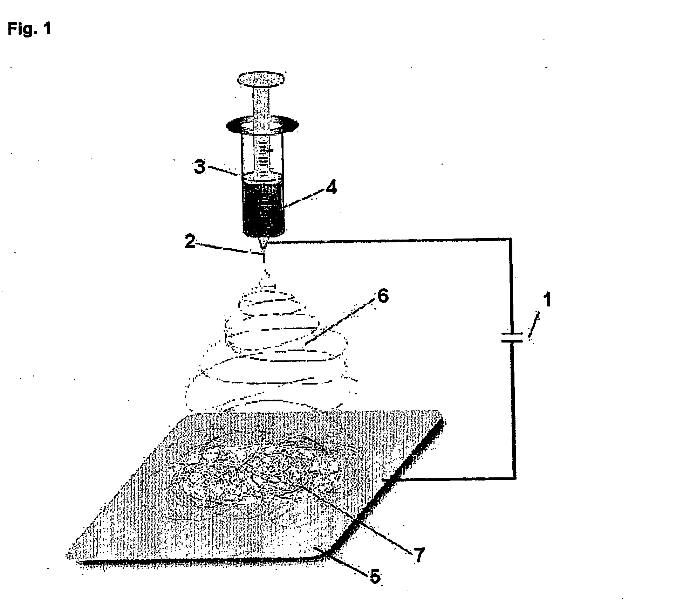

Alle genannten Spinnverfahren sind dem Fachmann bekannt und können, ohne den Schutzbereich der Patentansprüche zu verlassen, verwendet werden. Die Technik des Elektrospinnens ist in Fig. 1 schematisch dargestellt.

In einer bevorzugten Ausführungsform handelt es sich bei den erfindungsgemäßen Nano- oder Mesofasern um elektrogesponnene Fasern mit einem Durchmesser zwischen 10 µm und 20 µm.

In einer weiteren bevorzugten Ausführungsform handelt es sich bei den erfindungsgemäßen Nano- oder Mesofasern um elektrogesponnene Fasern mit einem Durchmesser zwischen 1 µm und 10 µm.

In einer weiteren bevorzugten Ausführungsform handelt es sich bei den erfindungsgemäßen Nano- oder Mesofasern um elektrogesponnene Fasern mit einem Durchmesser zwischen 5 nm und 1 µm.

Erfindungsgemäß werden nichtionische Polymere ausgewählt aus Polystyrolen, Poly-(p-xylylenen), Polyvinylchlorid, Polyestern, Polyethern, Polyolefinen, Polycarbonaten, Polyurethanen, natürlichen Polymeren, Polycarbonsäuren, Polysulfonsäuren, sulfatierten Polysacchariden, Polylactonen, Polylactiden, Polyglycosiden, Polyamiden, Polyamidimiden, Polyvinylalkoholen, Polyvinylidenfluoriden, Poly-α-Methylstyrolen, Polymethacrylaten, Polyacrylnitrilen, Poly-(p-xylylen), Polyacrylamiden, Polyimiden, Polyphenylenen Polysilanen, Polysiloxanen, Polybenzimidazolen, Polybenzthiazolen, Polyoxazolen, Polysulfiden, Polyesteramiden, Polyarylenvinylenen, Polyetherketonen, Polyurethanen, Polysulfonen, Ormocerenen, Polyacrylaten, Siliconen, vollaromatischen Copolyestern, Poly-N-vinylpyrrolidonen, Polyhydroxyethylmethacrylaten, Polymethylmethacrylaten, Polyethylenterephthalaten, Polymethacrylnitrilen, Polyvinylacetaten, Polyharnstoff, Neopren, Buna N, Polybutadien, Polytetrafluorethylen, Zellulose, Zelluloseacetat, α-Olefinen, Vinylsulfonsäuren, Maleinsäuren, Alginaten oder Collagenen.

Des Weiteren kann es sich bei den erfindungsgemäßen Nano- oder Mesofasem um nichtionische Polymerfasern aus der Gruppe der Carbonfasern (Kohlenstofffasem) handeln.

Meso- und Nanofasem aus Keramik oder Metallen werden erfindungsgemäß aus den entsprechenden Precursormaterialien hergestellt. Dem Fachmann ist bekannt, welche Precursoren er auswählen muss, wie er daraus Meso-und Nanofasem herstellt und wie er die Fasern bestehend aus Precursormaterialien in die entsprechenden Keramik- oder Metall-Nano- und Mesofasem überführen kann. Er kann diese Kenntnisse anwenden, ohne den Schutzbereich der Patentansprüche zu verlassen.

Polyelektrolyte sind Polymere, die an jeder Repetiereinheit ionische Gruppen tragen. Damit die Polyektrolyteigenschaften hervortreten, muss es zur Dissoziation kommen, die jedoch selbst in Wasser eingeschränkt sein kann. Durch entsprechende Zusätze, z. B. Säuren oder Basen, kann die Dissoziationsfähigkeit und damit die Polyektrolytstärke gesteigert werden. Werden gegensinnig geladene Polyektrolyte eingesetzt, kann es unter Ladungsausgleich zur Bildung von Polyektrolytenkomplexen kommen, die in der Regel nur schwer wieder hydrolysierbar sind.

Es gibt eine Reihe technisch verfügbarer Polyelektrolyte bzw. Polymere, die durch Säuren- bzw. Basenbehandlung Polyektrolytcharakter annehmen.

Beispielsweise, aber nicht erschöpfend, seien genannt:
Positiv geladene Polyektrolyte: Polyvinylamin, Poly(diallyldimethylammoniumchlorid), Polypyridin, Polyethylenimin.
Negativ geladene Polyelektrolyte: Polyacrylsäure, Polyalkohol, Polystyrolsulfonsäure.

Dem Fachmann sind zahlreich weitere Polyelektrolyte bekannt. Er kann sie einsetzen, ohne den Schutzbereich der Patentansprüche zu verlassen.

Ionomere sind Polymere, die aus Makromolekülen zusammengesetzt sind, wobei ein kleiner, aber signifikanter Anteil der sich wiederholenden Einheiten (d.h. der Monomere) ionische und/oder ionisierbare Gruppen aufweist. Ionomere im Sinne der vorliegenden Erfindung sind beispielsweise, aber nicht erschöpfend, Ethylenionomere (z.B. Poly(ethylen-co-methacrylsäure)), Perfluorosulfonationomere, alkylierte Styrolionomere, Polyacrylsäureionomere) Poly(arylenether-phosphoniumbromid)-ionomere, Poly(arylenether phosphonium)-ionomere, NLO-Ionomere und Poly(arylenether-phosphonium)-NLO-ionomere, wobei NLO für "nonlinear optical polymers" (nichtlineare optische Polymere) steht.

Die Partikel, welche auf der Oberfläche der Meso- oder Nanofasem aufgebracht sind, werden ausgewählt aus der Gruppe nicht ionische Polymerpartikel, ionische Polymerpartikel, Ionomerpartikel, Metallpartikel, Carbonmaterialien, Pigmente, magnetische Partikel, biologische Partikel.

Dabei werden entweder solche Partikel eingesetzt, bei denen mindestens die Oberfläche bereits ionisch funktionalisiert ist, oder die Oberfläche der Partikel wird zunächst ionisch funktionalisiert, bevor sie mit ionisch funktionalisierten Nano- oder Mesofasem gegensinniger Ladung in Kontakt gebracht werden. Partikel, bei denen mindestens die Oberfläche ionisch funktionalisiert ist, werden nachfolgen als "ionisch funktionalisierte Partikel" bezeichnet.

In einer bevorzugten Ausführungsform handelt es sich bei den auf der Oberfläche der Meso- oder Nanofasem aufgebrachten Partikel um ionisch funktionalisierte Meso- oder Nanopartikel.

Unter Mesopartikeln werden Partikel verstanden, deren größte Längenausdehnung größer als 1 µm und kleiner oder gleich 1.000 µm beträgt.

Unter Nanopartikeln werden Partikel verstanden, deren größte Längenausdehnung größer oder gleich 1 nm und kleiner oder gleich 1.000 nm beträgt.

Die geometrische Form der ionisch funktionalisierten Partikel, welche auf der Oberfläche der Meso- oder Nanofasern aufgebracht sind, ist kompakt, sphärisch, hohl und gefüllt, hohl und ungefüllt, isotrop, anisotrop, schichtweise aufgebaut, eine Gradiententstruktur aufweisend, himbeerartig oder janusartig.

Die ionisch funktionalisierten Partikel, welche auf der Oberfläche der Meso- oder Nanofasem aufgebracht sind, weisen mindestens eine der nachfolgend genannten Eigenschaften auf: organisch, anorganisch, polymer, superhydrophob, superhydrophil, antibakteriell, fungizid, biokompatibel, farbig, wärmeleitfähig, elektrisch leitfähig, thermoelektrisch, elektrisch isolierend, chemisch reaktiv (beispielweise basisch oder sauer), proteinbindend. Dabei können die Partikel auch mehrere dieser genannten Eigenschaften aufweisen, sofern sich die Eigenschaften nicht gegenseitig ausschließen. Dem Fachmann ist bekannt, welche dieser Eigenschaften nicht gleichzeitig vorliegen können, beispielsweise im Falle des Gegensatzpaares "elektrisch leitfähig / elektrisch isolierend".

In einer bevorzugten Ausführungsform handelt es sich bei den ionisch funktionalisierten Partikeln um ionisch funktionalisierte Polymermikropartikel oder ionisch funktionalisierte Polymernanopartikel, beispielsweise um ionisch funktionalisierte Partikel aus Polystyrol, Polyacrylat, Polyurethan, Polybutadien, Polyisopren, Naturkautschuk, vernetzte Polyacrylsäure, vernetztes Polyethylenimin, Polytetrafluorethylen.

In einer weiteren bevorzugten Ausführungsform handelt es sich bei den ionisch funktionalisierten Partikeln um Metallpartikel, beispielsweise aus Silber, Gold, Chrom, Eisen, Palladium, Platin, Nickel, Kobalt, Kupfer, Vanadium, oder um Metalllegierungen.

In einer weiteren bevorzugten Ausführungsform handelt es sich bei den Partikeln um ionisch funktionalisierte Carbonmaterialien, beispielsweise um ionisch funktionalisierte Rußpartikel und/oder ionisch funktionalisierte Carbonnanoröhren.

In einer weiteren bevorzugten Ausführungsform handelt es sich bei den Partikeln um ionisch funktionalisierte Farbpigmente.

In einer weiteren bevorzugten Ausführungsform handelt es sich bei den Partikeln um biologische Partikel, beispielsweise um Enzyme, Viren, Zellen, Bakterien oder Antikörper.

In einer weiteren bevorzugten Ausführungsform handelt es sich bei den Partikeln um ionisch funktionalisierte magnetische Partikel ausgewählt aus der Gruppe ferromagnetisch, antiferromagnetisch, ferrimagnetisch und superparamagnetisch. Dem Fachmann ist bekannt, welche Substanzen die genannten magnetischen Eigenschaften aufweisen.

In einer bevorzugten Ausführungsform handelt es sich um ionisch funktionalisierte monodisperse Partikel. Unter "monodispers" werden dabei solche Partikel verstanden, deren durchschnittliche Partikelgröße einen Variationskoeffizienten kleiner oder gleich 10 % aufweist.

Die erfindungsgemäßen Partikel-Faser-Komposite werden hergestellt, indem ionisch funktionalisierte Nano- oder Mesofasern mit einer Dispersion umfassende gegensinnig geladene ionisch funktionalisierte Partikel in Kontakt gebracht werden.

Handelt es sich bei den Nano- oder Mesofasem um Polyelektrolyte oder Ionomere gemäß den obigen Definitionen, so weist die Oberfläche dieser Fasern bereits ionische Gruppen auf und kann direkt mit einer Dispersion umfassend ionisch funktionalisierte Partikel in Kontakt gebracht werden.

Handelt es sich bei den Nano- oder Mesofasern um nichtionische Polymere, Carbonfasem, Keramik- oder Metallfasern, so müssen diese zunächst ionisch funktionalisiert werden.

Dem Fachmann ist bekannt, wie er Nano- oder Mesofasem ionisch funktionalisieren kann. Für die ionische Funktionalisierung von nichtionische Polymeren oder Carbonfasem eignen sich beispielsweise, aber nicht erschöpfend Sulfonierung, Plasmabehandlung und Oxidation. Metall- und Keramikfasern lassen sich beispielsweise durch Silanisierung ionisch funktionalisieren, und Fasern aus Edelmetallen werden vorteilhaft durch Behandlung mit Thiolatlösungen ionisch funktionalisiert.

Handelt es sich bei den Partikeln um nichtionische Polymere, Ionomere oder biologische Partikel, so ist mindestens die Oberfläche dieser Partikel ionisch funktionalisiert. Derartige Partikel können direkt dispergiert und anschließend mit gegensinnig geladenen Meso- oder Nanofasem in Kontakt gebracht werden.

Handelt es sich bei den Partikeln um nicht ionische Polymerpartikel, Metallpartikel, Carbonmaterialien, Pigmente oder magnetische Partikel, so müssen diese zunächst ionisch funktionalisiert werden. Die ionische Funktionalisierung derartiger Partikel geschieht bevorzugt durch Behandlung der Partikel mit einem ionischen Tensid. Dabei werden die Partikel mit anionischen Tensiden behandelt, wenn sie auf die Oberfläche einer kationisch funktionalisierten Meso- oder Nanofaser aufgebracht werden sollen. Sollen die Partikel dagegen auf die Oberfläche einer anionisch funktionalisierten Meso- oder Nanofaser aufgebracht werden, so werden die Partikel kationisch funktionalisiert.

Die Tenside haften dabei auf der Oberfläche der Partikel und bilden eine geladene Schicht.

Dem Fachmann sind Aniontenside und Kationtenside bekannt, und er weiß, wie er Partikel mit diesen Tensiden behandeln muss, um eine ionisch funktionalisierte Schicht auf der Oberfläche der Partikel herzustellen.

In einer weiteren Ausführungsform des erfindungsgemäßen Verfahrens werden die ionisch funktionalisierten Meso- oder Nanofasern zunächst umfunktionalisiert, bevor sie mit einer Partikeldispersion in Kontakt gebracht werden.

Unter Umfunktionalisierung ist die Umkehrung der Ladung der Faseroberfläche zu verstehen. Dies geschieht bevorzugt, indem die ionisch funktionalisierten Meso- oder Nanofasem zunächst mit einer Lösung in Kontakt gebracht werden, welche gegensinnig geladene Ionen enthält oder beim Kontakt mit den ionisch funktionalisierten Nano- oder Mesofasern gegensinnig geladene Ionen bildet. "Gegensinnig geladen" bezieht sich dabei auf die Ladung der bereits ionisch funktinoalisierten Oberfläche.

Die Lösung, welche gegensinnig geladene Ionen enthält oder beim Kontakt mit den ionisch funktionalisierten Nano- oder Mesofasem gegensinnig geladene Ionen bildet,
enthält oder bildet somit
- Kationen, falls die ionischen oder ionisierbaren funktionellen Gruppen auf der Oberfläche der Nano- oder Mesofasem anionisch sind und
- Anionen, falls die ionischen oder ionisierbaren funktionellen Gruppen auf der Oberfläche der Nano- oder Mesofasem anionisch sind.

Meso- oder Nanofasern mit anionisch funktionalisierten Oberflächen werden auf diese Weise kationisch umfunktionalisiert und umgekehrt.

Dem Fachmann ist bekannt, welche Substanzen er einsetzen muss, um Kationen bzw. Anionen bildende Lösungen einzusetzen. Beispielsweise sind Lösungen von Polyethylenimin geeignet, um Kationen zu bilden, und solche von Polyacrylsäure, um Anionen zu bilden. Das Lösungmittel ist dabei Wasser oder ein Wasser enthaltendes homogenes Gemisch.

Umfunktionalisierte Meso- oder Nanofasem werden anschließend mit Dispersionen umfassend gegensinnig geladene ionisch funktionalisierte Partikel umgesetzt, um die erfindungsgemäßen Partikel-Faser-Komposite zu erhalten. Der Begriff "gegensinnige" Ladung der Partikel bezieht sich dabei auf die Ladung der Meso- oder Nanofasem nach der Umfunktionalisierung.

So werden gemäß dieser Ausführungsform entweder
a) anionisch funktionalisierte Meso- oder Nanofasem kationisch umfunktionalisiert und anschließend mit Dispersionen umfassend anionisch funktionalisierte Partikel umgesetzt
   oder
b) kationisch funktionalisierte Meso- oder Nanofasern anionisch umfunktionalisiert und anschließend mit Dispersionen umfassend kationisch funktionalisierte Partikel umgesetzt.

Die erfindungsgemäß einzusetzende Partikeldispersion enthält Partikel, wie sie oben definiert wurden, in einer wässrigen oder nicht wässrigen Dispersion. Bevorzugt beträgt die Konzentration der Partikel in der Dispersion 0,01 Gew.-% bis 70 Gew.%, besonders bevorzugt 10 Gew.% bis 50 Gew.-%.

Eine Dispersion im Sinne der vorliegenden Erfindung bezeichnet im Einklang mit dem Lehrbuchwissen eine Mischung von mindestens zwei nicht miteinander mischbaren Phasen, wobei eine der wenigstens zwei Phasen flüssig ist. In Abhängigkeit von dem Aggregatzustand der zweiten bzw. weiteren Phase werden Dispersionen in Aerosole, Emulsionen und Suspensionen unterteilt, wobei die zweite oder weitere Phase bei Aerosolen gasförmig, bei Emulsionen flüssig und bei Suspensionen fest ist. Die in einer bevorzugten Ausführungsform erfindungsgemäß einzusetzenden Dispersionen umfassend Polymermikropartikel oder Polymemanopartikel werden in der Fachsprache auch als Latex bezeichnet. Erfindungsgemäß wird ein Partikel-Flüssigkeitsgemisch als Dispersion bezeichnet, wenn die Löslichkeit der Partikel in der Flüssigkeit weniger als 0,1 Gew.-% beträgt.

Die vorliegende Erfindung gestattet es, von Nano- und Mesofasem auf vielfältige Art und Weise chemisch, physikalisch und/oder biologisch zu modifizieren. Da die Modifikation erfolgt, indem Partikel ausschließlich auf der Faseroberfläche angebracht werden, lässt sich das Verhältnis von Oberfläche zu Volumen der Kompositfasern gezielt erhöhen und/oder einstellen.

Die erfindungsgemäßen Partikel-Faser-Komposite eignen sich für Anwendungen in der Filtration, Separation (beispielsweise in Membranen), für die Ausrüstung von Textilien, die Freisetzung von Wirkstoffen, das Tissue Engineering, ferner für Wärmedämmung, Pflanzenschutz, Solarenergie, Sensorik und den Einsatz in Thermoelektrika.

So können die erfindungsgemäßen Partikel-Faser-Komposite beispielsweise Partikel enthalten, die ein Zielmolekül für einen Bindungspartner darstellen. Derartige Komposite eignen sich besonders für Anwendungen in Biotechnologie, Pharmazie und Medizin, z. B. für Filtrations- und Separationsanwendungen, um die besagten Bindungspartner an die erfindungsgemäßen Komposite zu binden. Bei diesen Bindungspartnem kann es sich etwa um Protein, Glykoproteine, DNA, RNA oder Zellfraktionen handeln.

Bei Partikeln, die ein Zielmolekül für potenzielle Bindungspartner darstellen, handelt es sich beispielsweise um Antikörper, Antikörperfragmente, Biotin, Avidin, Streptavidin, einen Metallionenchelator, einen Enzymkofaktor, eine Nukleinsäure, Protein A, Protein G, eine Zelle oder ein Zellfragment.

Mit Hilfe der erfindungsgemäßen Partikel-Faser-Komposite können Fasern für Textilien auf vielfältige Weise ausgerüstet werden, beispielsweise antistatisch, antibakteriell, hydrophob oder hypoallergen.

Des Weiteren können die erfindungsgemäßen Partikel-Faser-Komposite als Filtermedien oder semipermeable Membranen bei großtechnischen Prozessen verwendet werden. Hierfür sind insbesondere solche erfindungsgemäßen Komposite geeignet, die magnetische Partikel enthalten.

Erfindungsgemäße Partikel-Faser-Komposite können außerdem in elektronischen Speichermedien, Piezoelektrika, Piezomagnetika und Sensoren verwendet werden.

### Ausführungsbeispiele

### Beispiel 1:

### Partikel-Faser-Komposite aus Polystyrolfasern und Polystyrolpartikeln mit 335 nm Durchmesser

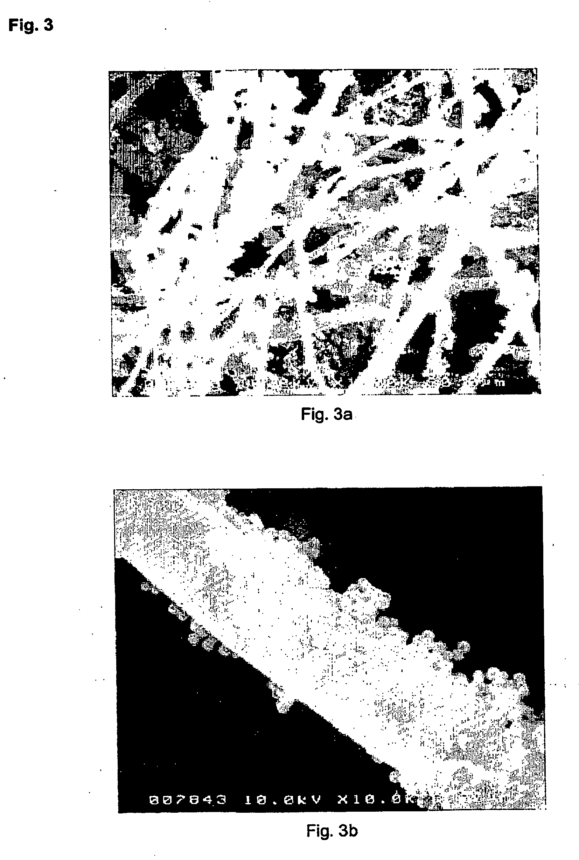

10 mg elektogesponnener Polystyrolfasern werden 5 Minuten mit 98 %iger Schwefelsäure bei Raumtemperatur behandelt. Anschließend werden die behandelten, anionisch funktionalisierten Fasern mit Wasser neutral gewaschen. Dann werden die Fasern mit einer wässrigen Polyethyleniminlösung (1 mg/ml, 0,5 mol NaCl) 20 Minuten behandelt. Anschließend werden die so erhaltenen, kationisch umfunktionalisierten Fasern mit Wasser gewaschen. Zuletzt werden die Fasern mit einer wässrigen Dispersion von Polystyrollatexpartikeln (Durchmesser 335 nm) behandelt und anschließend 24 Stunden getrocknet. Die Polystyrollatexpartikel sind mit anionischen Tensiden ionisch funktionalisiert. Es werden Partikel-Faserkomposite wie in Fig. 3 gezeigt erhalten.

### Beispiel 2:

### Partikel-Faser-Komposite aus Polystyrolfasern und Polystyrolpartikeln mit 100 nm Durchmesser

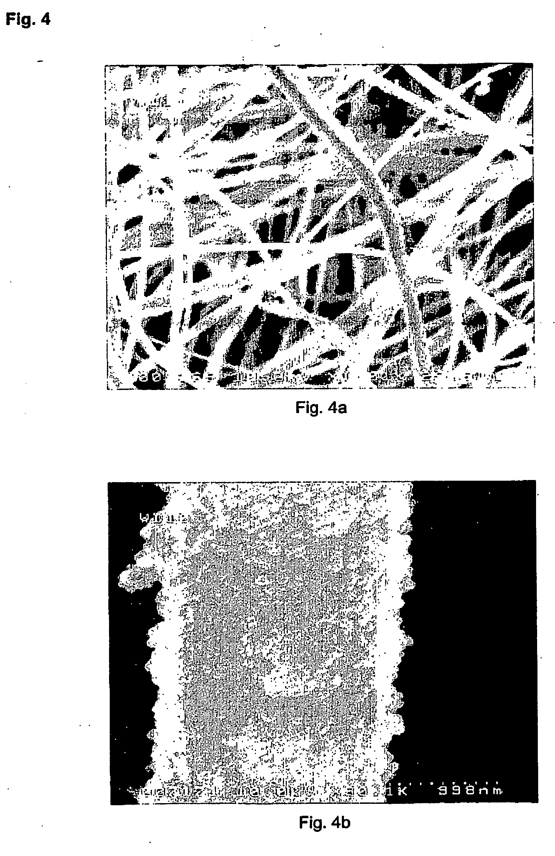

Die Partikel-Faser-Komposite werden wie in Beispiel 1 beschrieben hergestellt, allerdings wird eine wässrige Dispersion von Polystyrollatexpartikeln mit 100 nm Durchmesser verwendet. Die Polystyrollatexpartikel sind mit anionischen Tensiden ionisch funktionalisiert. Es werden Partikel-Faserkomposite wie in Fig. 4 gezeigt erhalten.

### Bezugszeichenliste

- 1: Spannungsquelle
- 2: Kapillardüse
- 3: Spritze
- 4: Polyelektrolytlösung
- 5: Gegenelektrode
- 6: Faserbildung
- 7: Fasermatte
- 8: elektrogesponnene Faser aus einem nichtionischen Polymer
- 9: sulfonierte Faser (anionisch funktionalisierte Faser)
- 10: sulfonierte, mit Polyimid behaftete Faser (kationisch umfunktionalisierte Faser)
- 11: Faser-Partikel-Komposit

### Abbildungslegenden

### Fig.1

Fig 1 zeigt eine schematische Darstellung einer zur Durchführung des erfindungsgemäßen Elektrospinnverfahrens geeigneten Vorrichtung.

Die Vorrichtung umfasst eine Spritze **3**, an deren Spitze sich eine Kapillardüse **2** befindet. Diese Kapillardüse **2** ist mit einem Pol einer Spannungsquelle **1** verbunden. Die Spritze **3** nimmt die zu verspinnenden Polyelektrolytlösungen **4** auf. Gegenüber dem Ausgang der Kapillardüse **2** ist in einem Abstand von etwa 20 cm eine mit dem anderen Pol der Spannungsquelle **1** verbundene Gegenelektrode **5** angeordnet, die als Kollektor für die gebildeten Fasern fungiert.

Während der Betriebs der Vorrichtung wird an den Elektroden **2** und **5** eine Spannung zwischen 18 kV und 35 kV eingestellt und die Polyelektrolytlösung **4** unter einem geringen Druck durch die Kapillardüse **2** der Spritze **3** ausgetragen. Auf Grund der durch das starke elektrische Feld von 0,9 bis 2 kV/cm erfolgenden elektrostatischen Aufladung der Polyelektrolyte in der Lösung entsteht ein auf die **Gegenelektrode** 5 gerichteter Materialstrom, der sich auf dem Wege zur Gegenelektrode 5 unter Faserbildung 6 verfestigt, infolge dessen sich auf der Gegenelekrode 5 Fasern 7 mit Durchmessern im Mikro- und Nanometerbereich abscheiden.

### Fig. 2

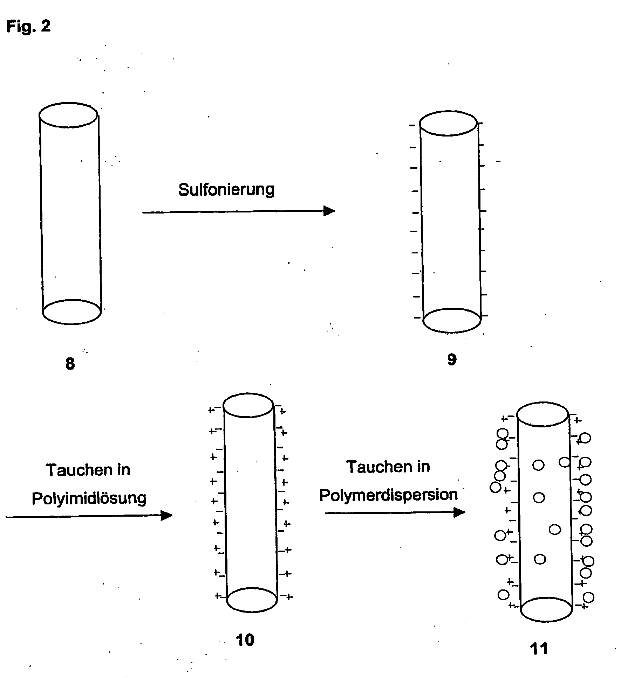

Fig. 2 stellt schematisch die Herstellung von Partikel-Faser-Kompositen dar, bei denen die Faser aus einem nichtionischen Polymer besteht, das zunächst ionisch funktionalisiert und dann umfunktionalisiert wird.

Die elektrogesponnene Faser aus einem nichtionischen Polymer **(8)** wird zunächst sulfoniert. Die sulfonierte und damit anionisch funktionalisierte Faser **(9)** wird im nächsten Schritt mit einer Polyimidlösung versetzt, um sie kationisch zu funktionalisieren (10). Zuletzt wird die Faser mit einer anionisch funktionalisierten Partikeldispersion in Kontakt gebracht, wodurch die Partikel auf der Faseroberfläche gebunden werden und Partikel-Faser-Komposite (11) entstehen.

### Fig. 3

Fig. 3 zeigt digitalmikroskopische Aufnahmen von Polystyrolfasern, die mit Polystyrolpartikeln von 335 nm Durchmesser belegt sind.

Fig. 3a): Die gepunktete Linie am rechten unteren Bildrand entspricht 30 µm.

Fig. 3b): Die gepunktete Linie am rechten unteren Bildrand entspricht 3 µm.

### Fig. 4

Fig. 4 zeigt digitalmikroskopische Aufnahmen von Polystyrolfasern, die mit Polystyrolpartikeln von 100 nm Durchmesser belegt sind.

Fig. 4a): Die gepunktete Linie am rechten unteren Bildrand entspricht 30 µm.

Fig. 4b): Die gepunktete Linie am rechten unteren Bildrand entspricht 3 µm.

## Patentansprüche

1. Kompositfasern umfassend ionisch funktionalisierte Nano- oder Mesofasern und gegensinnig geladene ionisch funktionalisierte Partikel, welche auf der Oberfläche der Nano- oder Mesofasern aufgebracht sind, **dadurch gekennzeichnet, dass** die Nano- oder Mesofasern ionisch funktionalisierte elektrogesponnene Fasern sind.

2. Kompositfasern gemäß Anspruch 1, **dadurch gekennzeichnet, dass** die Nano- oder Mesofasern aus einem ionisch funktionalisierten nichtionischen Polymer bestehen.

3. Kompositfasern gemäß einem der Ansprüche 1 oder 2, **dadurch gekennzeichnet, dass** das nichtionische Polymer ausgewählt ist aus der Gruppe umfassend Polystyrole, Poly-(p-xylylene), Polyvinylchlorid, Polyester, Polyether, Polyolefine, Polycarbonate, Polyurethane, natürliche Polymere, Polycarbonsäuren, Polysulfonsäuren, sulfatierte Polysaccharide, Polylactone, Polylactide, Polyglycoside, Polyamide, Polyamidimide, Polyvinylalkohole, Polyvinylidenfluoride, Poly-α-Methylstyrole, Polymethacrylate, Polyacrylnitrile, Poly-(p-xylylen), Polyacrylamide, Polyimide, Polyphenylene, Polysilane, Polysiloxane, Polybenzimidazole, Polybenzthiazole, Polyoxazole, Polysulfide, Polyesteramide, Polyarylenvinylene, Polyetherketone, Polyurethane, Polysulfone, Ormocerene, Polyacrylate, Silicone, vollaromatische Copolyester, Poly-N-vinylpyrrolidone, Polyhydroxyethylmethacrylate, Polymethylmethacrylate, Polyethylenterephthalate, Polymethacrylnitrile, Polyvinylacetate, Polyharnstoff, Neopren, Buna N, Polybutadien, Polytetrafluorethylen, Zellulose, Zelluloseacetat, α-Olefine, Vinylsulfonsäuren, Maleinsäuren, Alginate oder Collagene, Carbonfasern.

4. Kompositfaser gemäß einem der Ansprüche 1 oder 2, **dadurch gekennzeichnet, dass** die Nano- oder Mesofaser eine ionisch funktionalisierte Keramik- oder Metallfaser, eine Polyelektrolytfaser oder eine lonomerfaser ist.

5. Kompositfaser gemäß einem der Ansprüche 1 bis 4, **dadurch gekennzeichnet, dass** die ionisch funktionalisierten Partikel ausgewählt sind aus der Gruppe ionisch funktionalisierte nicht ionische Polymerpartikel, ionische Polymerpartikel, lonomerpartikel, ionisch funktionalisierte Metallpartikel, ionisch funktionalisierte Carbonmaterialien, ionisch funktionalisierte Pigmente, biologische Partikel.

6. Kompositfaser gemäß einem der Ansprüche 1 bis 5, **dadurch gekennzeichnet, dass** die ionisch funktionalisierten Partikel organisch, anorganisch, polymer, superhydrophob, superhydrophil, antibakteriell, fungizid, biokompatibel, farbig, wärmeleitfähig, elektrisch leitfähig, thermoelektrisch, elektrisch isolierend, chemisch reaktiv und/oder proteinbindend sind.

7. Kompositfaser gemäß einem der Ansprüche 1 bis 4, **dadurch gekennzeichnet, dass** die ionisch funktionalisierten Partikel magnetisch sind, ausgewählt aus der Gruppe ferromagnetische Partikel, antiferromagnetische Partikel, ferrimagnetische Partikel, superparamagnetische Partikel.

8. Kompositfaser gemäß einem der Ansprüche 1 bis 7, **dadurch gekennzeichnet, dass** die ionisch funktionalisierten Partikel monodispers sind.

9. Verfahren zur Herstellung von Kompositfasern gemäß einem der Ansprüche 1 bis 8, **dadurch gekennzeichnet, dass** ionisch funktionalisierte Meso- oder Nanofasern mit einer Dispersion umfassend gegensinnig geladene ionisch funktionalisierte Partikel in Kontakt gebracht werden, wobei die ionisch funktionalisierten Meso- oder Nanofasern ionisch funktionalisierte elektrogesponnene Fasern sind.

10. Verfahren zur Herstellung von Kompositfasern gemäß Anspruch 9, **dadurch gekennzeichnet, dass** die Partikeldispersion ionisch funktionalisierte Partikel gemäß einem der Ansprüche 5 bis 8 sowie ein wässriges oder nicht wässriges Lösungsmittel umfasst.

11. Verfahren zur Herstellung von Kompositfasern gemäß einem der Ansprüche 9 oder 10, **dadurch gekennzeichnet, dass** es sich bei den ionisch funktionalisierten Meso- oder Nanofasern um umfunktionalisierte Fasern handelt.

12. Verwendung von Kompositfasern gemäß einem der Ansprüche 1 bis 8 zur Herstellung von Filter- und Separationsmedien.

13. Verwendung von Kompositfasern gemäß einem der Ansprüche 1 bis 8 zur Herstellung von Textilfasern.

14. Verwendung von Kompositfasern gemäß einem der Ansprüche 1 bis 8 zur Herstellung von elektronischen Speichermedien, Piezoelektrika, Piezomagnetika oder Sensoren.

## Claims

1. Composite fibres comprising ionically functionalised nano- or mesofibres and oppositely charged ionically functionalised particles which have been applied to the surface of the nano- or mesofibres, **characterised in that** the nano- or mesofibres are ionically functionalised electrospun fibres.

2. Composite fibres according to claim 1, **characterised in that** the nano- or mesofibres consist of an ionically functionalised non-ionic polymer.

3. Composite fibres according to one of claims 1 or 2, **characterised in that** the non-ionic polymer is selected from among the polystyrenes, poly-(p-xylylenes), polyvinylchloride, polyesters, polyethers, polyolefins, polycarbonates, polyurethanes, natural polymers, polycarboxylic acids, polysulphonic acids, sulphated polysaccharides, polylactones, polylactides, polyglycosides, polyamides, polyamide imides, polyvinylalcohols, polyvinylidene fluorides, poly-α-methylstyrenes, polymethacrylates, polyacrylonitriles, poly-(p-xylylene), polyacrylamides, polyimides, polyphenylenes, polysilanes, polysiloxanes, polybenzimidazoles, polybenzothiazoles, polyoxazoles, polysulphides, polyesteramides, polyarylenevinylenes, polyetherketones, polyurethanes, polysulphones, ormocerenes, polyacrylates, silicones, fully aromatic copolyesters, poly-N-vinylpyrrolidones, polyhydroxyethyl methacrylates, polymethyl methacrylates, polyethylene terephthalates, polymethacrylonitriles, polyvinylacetates, polyurea, neoprene, Buna N, polybutadiene, polytetrafluoroethylene, cellulose, cellulose acetate, α-olefins, vinylsulphonic acids, maleic acids, alginates or collagens, or carbon fibres.

4. Composite fibre according to one of claims 1 or 2, **characterised in that** the nano- or mesofibre is an ionically functionalised ceramic or metal fibre, a polyelectrolyte fibre or an ionomer fibre.

5. Composite fibre according to one of claims 1 to 4, **characterised in that** the ionically functionalised particles are selected from among ionically functionalised non-ionic polymer particles, ionic polymer particles, ionomer particles, ionically functionalised metal particles, ionically functionalised carbon materials, ionically functionalised pigments or biological particles.

6. Composite fibre according to one of claims 1 to 5, **characterised in that** the ionically functionalised particles are organic, inorganic, polymeric, superhydrophobic, superhydrophilic, antibacterial, fungicidal, biocompatible, coloured, thermally conductive, electrically conductive, thermoelectric, electrically insulating, chemically reactive and/or protein-binding.

7. Composite fibre according to one of claims 1 to 4, **characterised in that** the ionically functionalised particles are magnetic, selected from among ferromagnetic particles, antiferromagnetic particles, ferrimagnetic particles or superparamagnetic particles.

8. Composite fibre according to one of claims 1 to 7, **characterised in that** the ionically functionalised particles are monodisperse.

9. Method for the production of composite fibres according to one of claims 1 to 8, **characterised in that** ionically functionalised meso- or nanofibres are brought into contact with a dispersion comprising oppositely charged ionically functionalised particles, the ionically functionalised meso- or nanofibres being ionically functionalised electrospun fibres.

10. Method for the production of composite fibres according to claim 9, **characterised in that** the particle dispersion comprises ionically functionalised particles according to one of claims 5 to 8 as well as an aqueous or non-aqueous solvent.

11. Method for the production of composite fibres according to one of claims 9 or 10, **characterised in that** the ionically functionalised meso- or nanofibres are refunctionalised fibres.

12. Use of composite fibres according to one of claims 1 to 8 for the production of filtering and separating media.

13. Use of composite fibres according to one of claims 1 to 8 for the production of textile fibres.

14. Use of composite fibres according to one of claims 1 to 8 for the production of electronic storage media, piezoelectrics, piezomagnetics or sensors.

## Revendications

1. Fibres composites comprenant des nano-fibres ou méso-fibres fonctionnalisées par voie ionique et des particules fonctionnalisées par voie ionique à charge opposée, déposées sur la surface des nano-fibres ou méso-fibres, **caractérisées en ce que** les nano-fibres ou méso-fibres sont des fibres électro-filées fonctionnalisées par voie ionique.

2. Fibres composites selon la revendication 1, **caractérisées en ce que** les nano-fibres ou méso-fibres sont composées d'un polymère non ionique fonctionnalisé par voie ionique.

3. Fibres composites selon une des revendications 1 ou 2, **caractérisées en ce que** le polymère non ionique est sélectionné dans le groupe comprenant polystyroles, poly(p-xylylènes), polychlorure de vinyle, polyesters, polyéthers, polyoléfines, polycarbonates, polyuréthanes, polymères naturels, acides polycarboniques, acides polysulfonés, polysaccharides sulfatés, polyactones, polyactides, polyglycosides, polyamides, polyamidimides, alcools polyvinyliques, fluorures de polyvinylidène, poly-α-méthylstyrènes, polyméthacrylates, polyacrylonitriles, poly-(p-xylylène), polyacrylamides, polyimides, polyphénylènes, polysilanes, polysiloxanes, polybenzimidazoles, polybenzothiazoles, polyoxazoles, polysulfides, polyestéramides, polyarylène-vinylènes, polyéthercétones, polyuréthanes, polysulfones, ormocérènes, polyacrylates, silicones, copolyesters intégralement aromatiques, poly-N-vinylpyrrolidones, polyhydroxyéthylméthacrylates, polyméthylméthacrylates, polyéthylènetéréphthalates, polyméthacrylnitriles, polyvinylacétates, polyurée, néoprène, Buna N, polybutadiène, polytétrafluooréthylène, cellulose, acétate de cellulose, α-oléfines, acides vinylsulfoniques, acides maléiques, alginates ou collagènes, fibres de carbone.

4. Fibre composite selon une des revendications 1 ou 2, **caractérisée en ce que** la nano-fibre ou la méso-fibre est une fibre céramique ou métallique fonctionnalisée par voie ionique, une fibre poly-électrolyte ou une fibre ionomère.

5. Fibre composite selon une des revendications 1 à 4, **caractérisée en ce que** les particules fonctionnalisées par voie ionique sont sélectionnées dans le groupe de particules polymériques non ioniques fonctionnalisées par voie ionique, de particules polymériques ioniques, de particules ionomères, de particules métalliques fonctionnalisées par voie ionique, de matériaux en carbone fonctionnalisés par voie ionique, de pigments fonctionnalisés par voie ionique, de particules biologiques.

6. Fibre composite selon une des revendications 1 à 5, **caractérisée en ce que** les particules fonctionnalisées par voie ionique sont organiques, inorganiques, polymériques, super-hydrophobes, super-hydrophiles, antibactériennes, fongicides, biocompatibles, colorées, thermiquement conductrices, électriquement conductrices, thermoélectriques, électriquement isolantes, chimiquement réactives et/ou liantes pour les protéines.

7. Fibre composite selon une des revendications 1 à 4, **caractérisée en ce que** les particules fonctionnalisées par voie ionique sont magnétiques, sélectionnées dans le groupe de particules ferromagnétiques, de particules antiferromagnétiques, de particules ferrimagnétiques, de particules super-paramagnétiques.

8. Fibre composite selon une des revendications 1 à 7, **caractérisée en ce que** les particules fonctionnalisées par voie ionique sont mono-dispersées.

9. Procédé de production de fibres composites selon une des revendications 1 à 8, **caractérisé en ce que** des méso-fibres ou des nano-fibres fonctionnalisées par voie ionique sont mises en contact avec une dispersion comprenant des particules fonctionnalisées par voie ionique à charge opposée, où les méso-fibres ou nano-fibres fonctionnalisées par voie ionique sont des fibres électro-filées fonctionnalisées par voie ionique.

10. Procédé de production de fibres composites selon la revendication 9, **caractérisé en ce que** la dispersion de particules comprend des particules fonctionnalisées par voie ionique conformément à une des revendications 5 à 8 ainsi qu'un solvant aqueux ou non aqueux.

11. Procédé de production de fibres composites selon une des revendications 9 ou 10, **caractérisé en ce que** les méso-fibres ou nano-fibres fonctionnalisées par voie ionique sont des fibres à fonctionnalité modifiée.

12. Utilisation de fibres composites selon une des revendications 1 à 8 pour produire des moyens de filtrage et de séparation.

13. Utilisation de fibres composites selon une des revendications 1 à 8 pour produire des fibres textiles.

14. Utilisation de fibres composites selon une des revendications 1 à 8 pour produire des moyens d'enregistrement électronique, des dispositifs piézoélectriques, piézo-magnétiques ou des capteurs.
